# EUROPEAN PATENT SPECIFICATION

(11) **EP 3 279 989 B1**
(45) Date of publication and mention of the grant of the patent: **30.10.2019**
(21) Application number: 16771768.5
(22) Date of filing: 28.03.2016
(51) Int. Cl.: H01M 8/0271, H01M 8/2483, H01M 8/2432, H01M 8/124

(54) **FLAT PLATE TYPE FUEL CELL**
BRENNSTOFFZELLE VOM FLACHPLATTENTYP
PILE À COMBUSTIBLE DE TYPE PLAQUE PLATE

(30) Priority: 31.03.2015 JP 2015073681
(43) Date of publication of application: 07.02.2018
(73) Proprietor: NGK Spark Plug Co., Ltd., Nagoya-shi, Aichi 467-8525 (JP)
(72) Inventor: YOSHIZAKI, Hirotoshi, Nagoya-shi Aichi 467-8525 (JP); SHICHIDA, Takafumi, Nagoya-shi Aichi 467-8525 (JP)
(74) Representative: J A Kemp LLP
(86) International application number: PCT/JP2016/001780
(87) International publication number: WO 2016/157880

(56) References cited:
- WO-A1-99/26304
- WO-A1-2013/065757
- JP-A- H10 134 833
- JP-A- 2011 258 396
- US-A1- 2005 214 626
- US-A1- 2012 301 806
- US-A1- 2014 141 352

## Description

The present invention relates to a flat plate type fuel cell (hereinafter referred to as a "planar fuel cell apparatus") which includes a single fuel cell having an anode layer, a cathode layer, and a solid electrolyte layer sandwiched therebetween.

A conventionally known fuel cell apparatus is, for example, a solid oxide fuel cell (hereinafter, may be referred to as SOFC) apparatus which uses solid electrolyte (solid oxide).

The SOFC apparatus uses, for example, a planar single fuel cell having an anode layer provided on one side of a solid electrolyte layer and in contact with fuel gas, and a cathode layer provided on the other side of the solid electrolyte layer and in contact with oxidizer gas (e.g., air).

A fuel gas chamber which is a flow channel into which fuel gas is introduced is provided on an anode layer side of the single fuel cell, and an oxidizer gas chamber which is a flow channel into which oxidizer gas is introduced is provided on a cathode layer side of the single fuel cell. Further, in order to obtain an intended voltage, there has been developed a fuel cell stack in which a plurality of single fuel cells are stacked with interconnectors intervening therebetween (i.e., a fuel cell stack composed of a plurality of tiers).

Also, in recent years, there has been disclosed a fuel cell stack in which tiers different in terms of gas flow channels (flow channels for fuel gas) are combined so as to uniformize the in-plane temperature distribution of the single fuel cells (cell in-plane temperature distribution) (see Japanese Patent Application Laid-Open *(kokai)* No. 2002-141081).

Further, there has been disclosed a technique for improving (uniformizing) the cell in-plane temperature distribution by alternating, tier by tier, flow directions of fuel gas and oxidizer gas flowing through respective flow channels (see Japanese Patent Application Laid-Open *(kokai)* No. S62-080972).

However, the technique described in Japanese Patent Application Laid-Open *(kokai)* No. 2002-141081 has a problem that the technique cannot improve (uniformize) the cell in-plane temperature distribution to a sufficient degree and cannot improve the power generation efficiency of the single fuel cell itself.

In the technique described in Japanese Patent Application Laid-Open *(kokai)* No. S62-080972, by combining the gas flow channels for fuel gas and oxidizer gas such that the cell in-plane temperature distribution is improved (uniformized), the area of cell regions which operate in a temperature range for high efficiency can be increased. Therefore, power generation efficiency; in other words, output voltage under a predetermined current condition, tends to increase.

JP-A-H10-134833 discloses a fuel cell on which the precharacterizing portion of claim 1 is based. Other cross-flow fuel cells are disclosed by US-A1-2014/141352, US-A1-2005/214626, US-A1-2012/301806 and JP-A-2011-258396.

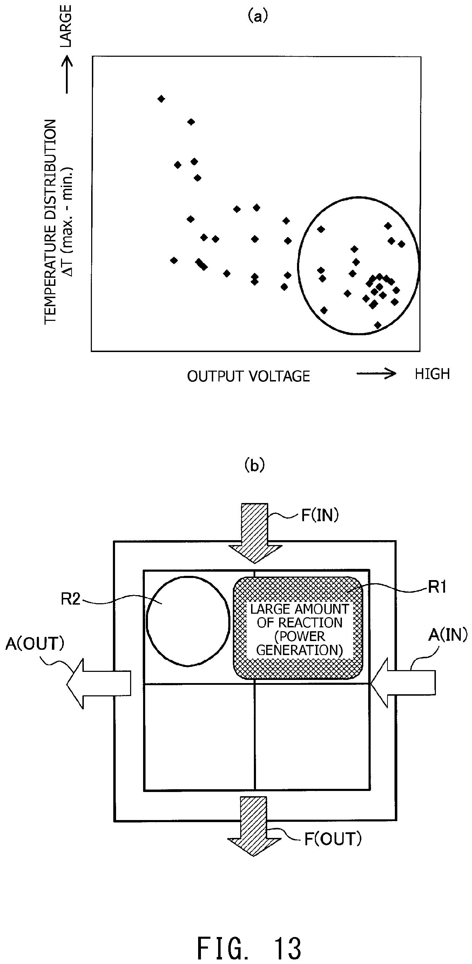

However, studies conducted by the present inventors have revealed that, in the case where a higher efficiency is sought by a method of changing the flows of the gasses, as shown in FIG. 13(a), uniformizing of the temperature distribution does not necessarily result in an increase in the output voltage. Namely, in the case where the temperature distribution ΔT is relatively small, no correlation exists between the temperature distribution and the output voltage.

This is because, for example, in the case of a cross-flow-type single fuel cell, it is considered that even when the cell in-plane temperature distribution is uniformized, for each of the fuel gas and the oxidizer gas, regions having different gas concentrations are formed, which affects the output voltage.

Namely, as shown in FIG. 13(b), apart from a region R1 in which both the concentration of fuel gas (e.g., hydrogen concentration) and the concentration of oxidizer gas (e.g., oxygen concentration) are high and the amount of reaction for power generation is large (accordingly, the amount of power generation is large), there is formed a region R2 in which although the concentration of fuel gas is higher, the concentration of oxidizer gas is low, and the amount of reaction for power generation is small (accordingly, the amount of power generation is small). Therefore, there has been a problem that it is not easy to increase the output voltage (namely, electricity generation capability).

The present invention has been conceived in view of the above problem, and an object of the invention is to provide a planar fuel cell apparatus which can enhance its electricity generation capability.

The present invention provides a planar fuel cell apparatus as defined by claim 1

The planar fuel cell apparatus of the invention is such that, as viewed in the stacking direction, the first rectilinear line which connects the centroid Cfi of the fuel gas inlet(s) and the centroid Cfo of the fuel gas outlet(s), and the second rectilinear line which connects the centroid Cai of the oxidizer gas inlet(s) and the centroid Cao of the oxidizer gas outlet(s) cross each other. That is, the planar fuel cell apparatus employs so-called cross-flow design in which a fuel gas flow channel and an oxidizer gas flow channel cross each other.

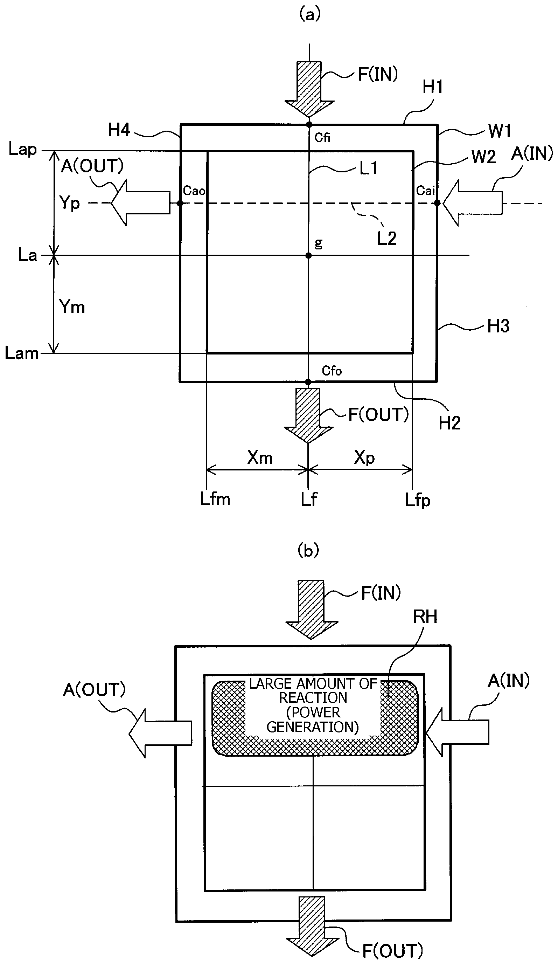

In the planar fuel cell apparatus of cross-flow design, for example, as exemplified in FIG. 5, as viewed in the stacking direction, the centroid Cao of the oxidizer gas outlet(s) is disposed closer to the centroid Cfi of the fuel gas inlet(s) than to the centroid Cfo of the fuel gas outlet(s).

By virtue of such disposition of the centroid Cao of the oxidizer gas outlet(s), the area of a region R2 in which although the concentration of fuel gas is higher, the concentration of oxidizer gas is low, and the amount of reaction (the amount of power generation) is small as in the conventional technique decreases, and the area of a region RH in which both the concentration of fuel gas and the concentration of oxidizer gas are high increases. Therefore, a remarkable effect of increasing output voltage (accordingly, enhancing electricity generation capability) is attained.

Also, according to the first mode, since the electricity generation capability (electricity generation efficiency) of the single fuel cell itself can be improved, the present invention can be applied to not only a fuel cell stack in which a plurality of single fuel cells are stacked but also a single-tier fuel cell apparatus which uses one single fuel cell.

Further, in the region in which the concentration of oxidizer gas is low although the concentration of fuel gas is high, deterioration of the single fuel cell occurs more easily. However, in the first mode, since the area of such a region is small, deterioration of the single fuel cell can be suppressed, whereby the durability of the fuel cell apparatus can be enhanced.

The expression "as viewed in the stacking direction" indicates a view in a direction (stacking direction) in which the anode layer, the solid electrolyte layer, and the cathode layer are laminated together. The term "centroid" indicates the center of gravity on a plane. The centroid of a gas inlet or outlet indicates the center of gravity of an opening of the gas inlet or outlet as viewed in a direction in which the planar fuel cell apparatus extends (a planar direction, or a direction perpendicular to the stacking direction). In the case where a plurality of gas inlets (outlets) exist, the center of gravity is of a set of all the gas inlets (or all the gas outlets) on a plane.

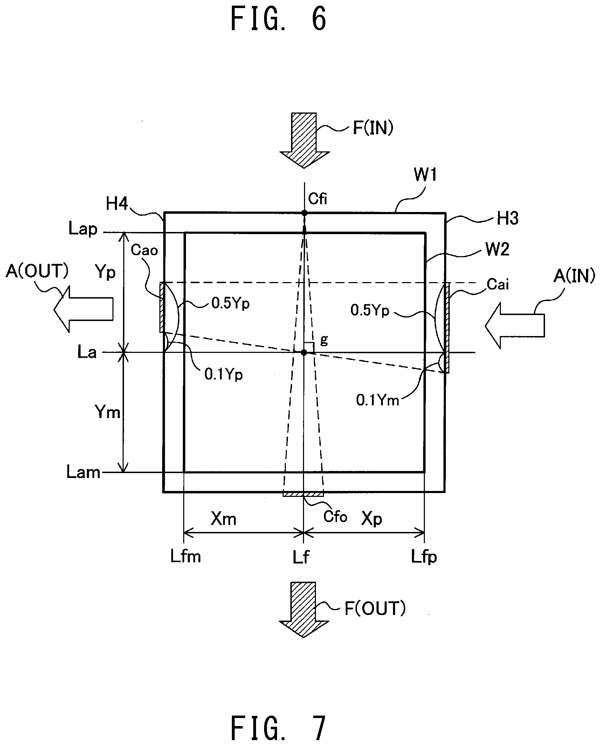

With the invention, the centroid Cfo of the fuel gas outlet(s), the centroid Cai of the oxidizer gas inlet(s), and the centroid Cao of the oxidizer gas outlet(s) are disposed as mentioned above (see, for example, FIG. 7). Thus, the invention can yield an effect of enhancing the electricity generation capability of the planar fuel cell apparatus, as is apparent from experimental examples to be described later.

As viewed in the stacking direction, the centroid Cai of the oxidizer gas inlet(s) may be disposed at a position offset from the reference line La toward the boundary line Lap by a distance of 0.3Yp to 0.5Yp; and the centroid Cao of the oxidizer gas outlet(s) is disposed at a position offset from the reference line La toward the boundary line Lap by a distance of 0.3Yp to 0.5Yp.

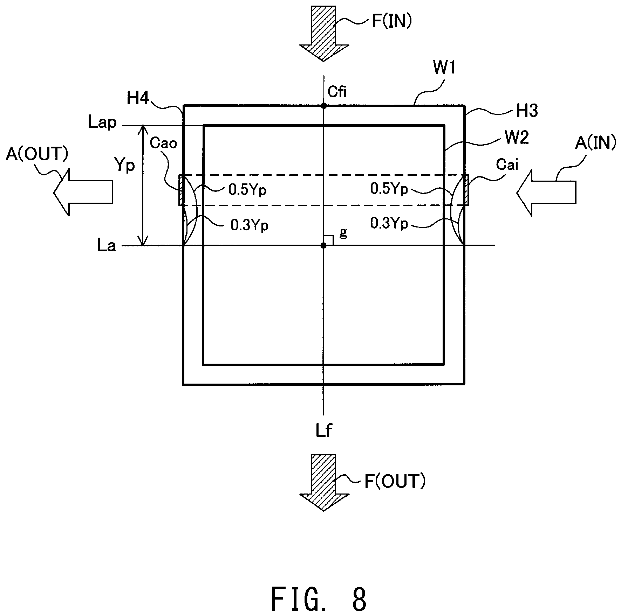

In this mode, the centroid Cai of the oxidizer gas inlet(s) and the centroid Cao of the oxidizer gas outlet(s) are disposed as mentioned above (see, for example, FIG. 8). Thus, the third mode can yield an effect of further enhancing the electricity generation capability of the planar fuel cell apparatus, as is apparent from the experimental examples to be described later.

As viewed in the stacking direction, the centroid Cai of the oxidizer gas inlet(s) may be disposed at a position located a distance of 0.1Yp or less from the reference line La toward the boundary line Lap or a distance of 0.1Ym or less from the reference line La toward the boundary line Lam; and the centroid Cao of the oxidizer gas outlet(s) is disposed at a position offset from the reference line La toward the boundary line Lap by a distance of 0.1Yp to 0.5Yp.

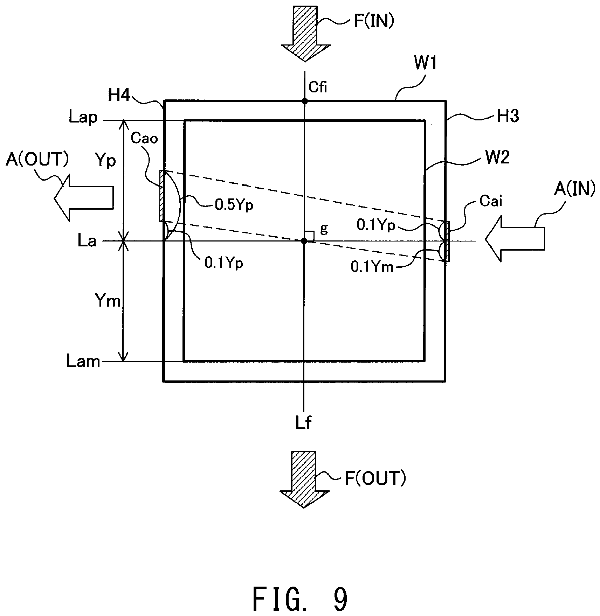

In this mode, the centroid Cai of the oxidizer gas inlet(s) and the centroid Cao of the oxidizer gas outlet(s) are disposed as mentioned above (see, for example, FIG. 9). Thus, the fourth mode can yield an effect of enhancing the electricity generation capability of the planar fuel cell apparatus, as is apparent from the experimental examples to be described later. Further, the electricity generation capability can be enhanced also by changing the position of the centroid Cao of the oxidizer gas outlets without greatly changing the position of the centroid Cai of the oxidizer gas inlets.

The present invention also provides a plurality of stacked planar fuel cell units each comprising a single fuel cell having an anode layer, a cathode layer, and a solid electrolyte layer sandwiched therebetween; a fuel gas chamber disposed on an anode layer side; an oxidizer gas chamber disposed on a cathode layer side; one or a plurality of fuel gas inlets through which fuel gas flows into the fuel gas chamber, and one or a plurality of fuel gas outlets through which the fuel gas flows out from the fuel gas chamber; and one or a plurality of oxidizer gas inlets through which oxidizer gas flows into the oxidizer gas chamber, and one or a plurality of oxidizer gas outlets through which the oxidizer gas flows out from the oxidizer gas chamber. At least any one of the planar fuel cell units is a planar fuel cell configured according to the invention.

This apparatus is a planar fuel cell apparatus (e.g., a fuel cell stack) in which a plurality of planar fuel cell units (e.g., electricity generation units) are stacked, and therefore, it can provide high output voltage.

In the case where the planar shape (a shape viewed in the stacking direction) of the fuel cell apparatus is quadrangular, the following configuration can be employed.

A planar fuel cell apparatus comprises a single fuel cell having a planar quadrangular shape and having a first main surface and a second main surface to which sides fuel gas and oxidizer gas are supplied respectively; a fuel gas chamber disposed on a first main surface side; an oxidizer gas chamber disposed on a second main surface side; in plan view (as viewed in a direction perpendicular to the main surfaces), one or a plurality of fuel gas inlets disposed at a position(s) corresponding to one of two mutually facing first sides (e.g., first side H1 and second side H2 in FIG. 5) of the single fuel cell and through which the fuel gas flows into the fuel gas chamber, and one or a plurality of fuel gas outlets disposed at a position(s) corresponding to the other first side and through which the fuel gas flows out from the fuel gas chamber; and one or a plurality of oxidizer gas inlet disposed at a position corresponding to one of two mutually facing second sides (e.g., third side H3 and fourth side H4 in FIG. 5) different from the first sides of the single fuel cell and through which the oxidizer gas flows into the oxidizer gas chamber, and one or a plurality of oxidizer gas outlet disposed at a position corresponding to the other second side and through which the oxidizer gas flows out from the oxidizer gas chamber. The planar fuel cell apparatus is characterized in that the centroid Cao of the oxidizer gas outlet is located closer to the centroid Cfi of the fuel gas inlet(s) than to the centroid Cfo of the fuel gas outlet(s).

The invention will be further described by way of examples with reference to the accompanying drawings, in which:
FIG. 1 is a perspective view of a fuel cell stack of a first embodiment.
FIG. 2(a) is a sectional view of an electricity generation unit taken along the stacking direction.
FIG. 2(b) is an explanatory view showing flow channels of fuel gas and oxidizer gas in the electricity generation unit.
FIG. 3 is an exploded perspective view showing the electricity generation unit.
FIG. 4 shows views showing inner peripheral surfaces of frames of a single fuel cell as viewed from the center of the single fuel cell, wherein (a) is an explanatory view showing the first surface of an anode insulating frame, (b) is an explanatory view showing the second surface of the anode insulating frame, (c) is an explanatory view showing the third surface of a cathode insulating frame, and (d) is an explanatory view showing the fourth surface of the cathode insulating frame.
FIG. 5(a) is an explanatory view showing flow channels in an electricity generation unit of a first embodiment as viewed in a stacking direction.
FIG. 5(b) is an explanatory view showing a region of the electricity generation unit in which a larger amount of electricity is generated.
FIG. 6(a) is an explanatory view showing flow channels in an electricity generation unit of a second embodiment as viewed in the stacking direction.
FIG. 6(b) is an explanatory view showing a region of the electricity generation unit in which a larger amount of electricity is generated.
FIG. 7 is an explanatory view showing flow channels in an electricity generation unit of a third embodiment as viewed in the stacking direction.
FIG. 8 is an explanatory view showing flow channels in an electricity generation unit of a fourth embodiment as viewed in the stacking direction.
FIG. 9 is an explanatory view showing flow channels in an electricity generation unit of a fifth embodiment as viewed in the stacking direction.
FIG. 10 is an explanatory view showing flow channels in an electricity generation unit of a sixth embodiment as viewed in the stacking direction.
FIG. 11 is an explanatory view showing flow channels in an electricity generation unit of experiment model 2 as viewed in the stacking direction.
FIG. 12 is a graph showing the relation between the positions of flow channels and a change of output voltage obtained from the results of experimental example 2.
FIG. 13 shows graphs relating to the conventional technique, wherein (a) is a graph showing the relation between temperature distribution and output voltage of a fuel cell, and (b) is an explanatory view showing the relation between flow channels and a region in which a large amount of electricity is generated and a region in which a small amount of electricity is generated, as viewed in the stacking direction of the electricity generation unit.

A planar fuel cell apparatus to which the present invention is applied will next be described while referring to a solid oxide fuel cell apparatus.

### [First embodiment]

a) First, the schematic structure of a planar fuel cell apparatus of the first embodiment will be described.

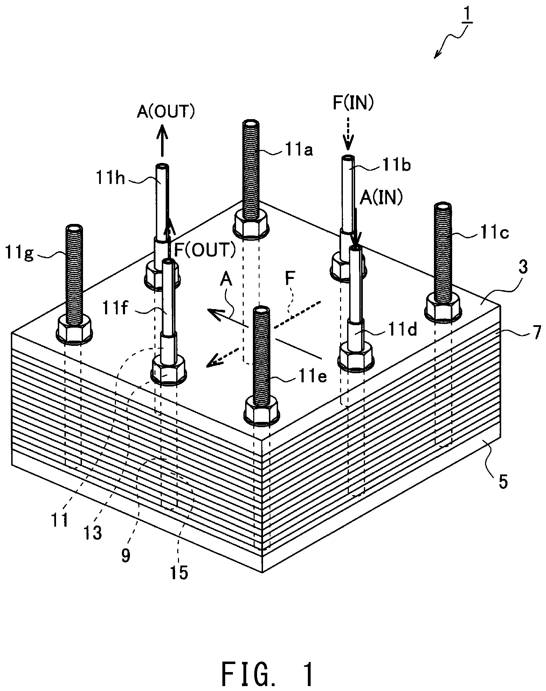

As shown in FIG. 1, a planar fuel cell apparatus (hereinafter, may be referred to merely as "fuel cell apparatus") 1 of the first embodiment generates electricity by use of fuel gas (e.g., hydrogen) and oxidizer gas (e.g., air, more specifically oxygen contained in air) supplied thereto.

In the drawings, oxidizer gas is denoted by "A," and fuel gas is denoted by "F." Also, "IN" indicates that gas is introduced, and "OUT" indicates that gas is discharged. Further, for convenience of description, directions such as "upper" and "lower" are mentioned on the basis of directions in the drawings, but are not intended to specify the directivity of an actual fuel cell stack.

The fuel cell apparatus 1 of the first embodiment is a planar (rectangular parallelepiped) solid oxide fuel cell apparatus and is a fuel cell stack configured such that a plurality of (e.g., 20) tiered (planar) electricity generation units 7 are disposed between end plates 3 and 5 disposed at vertically opposite ends in FIG. 1.

The end plates 3 and 5 and the electricity generation units 7 have a plurality of (e.g., eight) bolt insertion holes 9 extending therethrough in a stacking direction (vertical direction in FIG. 1). Two of the bolt insertion holes 9 are used as gas flow channels for oxidizer gas, and other two of the bolt insertion holes 9 are used as gas flow channels for fuel gas.

The end plates 3 and 5 and the electricity generation units 7 are unitarily fixed by bolts 11a, 11b, 11c, 11d, 11e, 11f, 11g, and 11h (collectively referred to as bolts 11) disposed in the bolt insertion holes 9, and nuts 13 threadingly engaged with the respective bolts 11.

Of the bolts 11, the particular (four) bolts 11b, 11d, 11f, and 11h have an inner flow channel 15 formed therein along the axial direction (the vertical direction in FIG. 1) and through which oxidizer gas or fuel gas flows. The bolt 11b is used for introduction of fuel gas; the bolt 11d is used for introduction of oxidizer gas; the bolt 11f is used for discharge of fuel gas; and the bolt 11h is used for discharge of oxidizer gas.

b) Next, the structure of the electricity generation unit 7 will be described in detail.

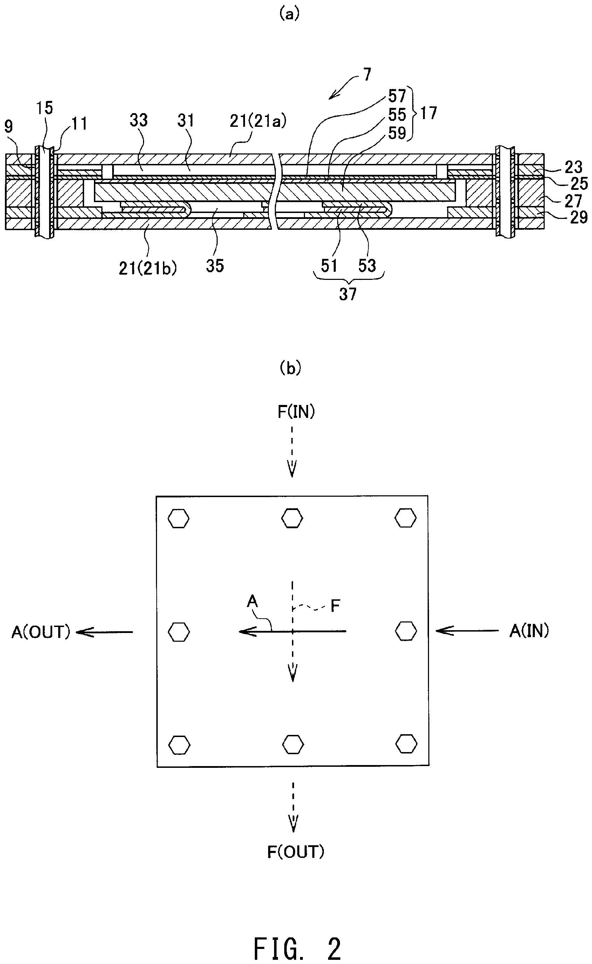

As shown in FIG. 2, the electricity generation unit 7 is configured such that components required for generation of electricity such as a single fuel cell (hereinafter, may be referred to merely as a "single cell") 17 to be described later are disposed between two interconnectors 21a and 21b (collectively referred as interconnectors 21) disposed at opposite sides with respect to the stacking direction (the vertical direction in FIG. 2(a)).

More specifically, the electricity generation unit 7 is configured such that the metal interconnector 21a, a cathode insulating frame 23, a metal separator 25, a metal anode frame 27, an anode insulating frame 29, the metal interconnector 21b, etc., are stacked. The stacked members 21, 23, 24, 27, and 29 have the bolt insertion holes 9 formed therein and allowing insertion of the respective bolts 11.

The single cell 17 is joined to the separator 25; a cathode current collector 33 is disposed in a flow channel (a flow channel in which oxidizer gas flows; i.e., an oxidizer gas chamber) 31 within the cathode insulating frame 23; and an anode current collector 37 is disposed in a flow channel (a flow channel in which fuel gas flows; i.e., fuel gas chamber) 35 within the anode frame 27 and the anode insulating frame 29.

The components will next be described in detail.

### <Interconnector 21 >

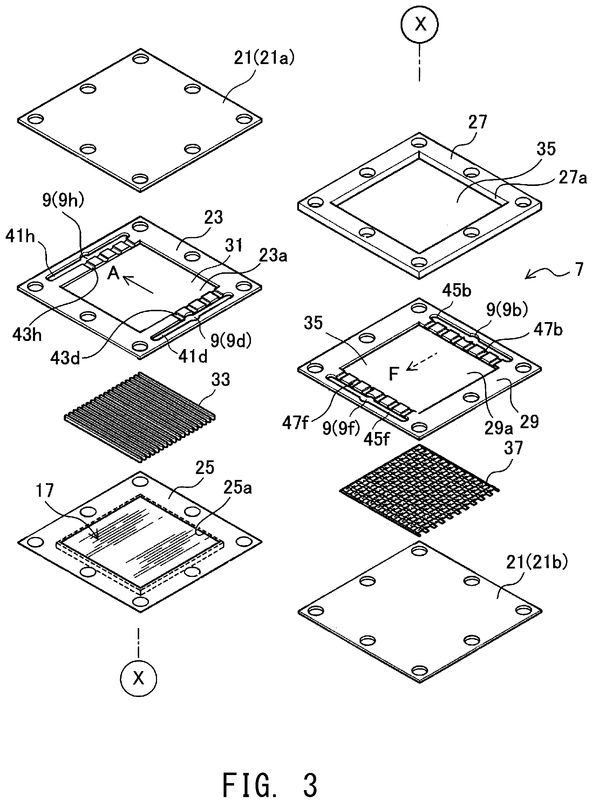

As shown in FIG. 3, the interconnector 21 is formed of an electrically conductive plate (e.g., a plate of stainless steel such as SUS430). The interconnector 21 secures electrical conduction between the single cells 17 and prevents the mixing of gases between the single cells 17 (accordingly, between the electricity generation units 7).

A single interconnector 21 suffices for disposition between the adjacent electricity generation units 7. Also, the interconnectors 21 at the upper and lower ends of the fuel cell apparatus 1 are used as the end plates 3 and 5 (see FIG. 1).

### <Cathode insulating frame 23>

The cathode insulating frame 23 is an electrically insulative frame plate having a quadrangular (rectangular) shape as viewed in the stacking direction (as viewed in the vertical direction in FIG. 2(a)). For example, a mica frame formed of soft mica is used as the cathode insulating frame 23. The cathode insulating frame 23 has a rectangular opening portion 23a formed at a central portion as viewed in the stacking direction and partially constituting the oxidizer gas chamber 31.

The cathode insulating frame 23 has two hole portions 41d and 41h, or a pair of elongated holes, formed at mutually facing frame portions (portions corresponding to opposite sides of a rectangle) and serving as oxidizer gas flow channels. As will be described in detail later, one hole portion 41d is accompanied by a plurality of (e.g., four) grooves (grooves for oxidizer gas inlets Ain) 43d, which are flow channels communicating with the opening portion 23a, and the other hole portion 41h is accompanied by a plurality of (e.g., four) grooves (grooves for oxidizer gas outlets Aout) 43h, which are flow channels communicating with the opening portion 23a.

### <Cathode current collector 33>

The cathode current collector 33 is an elongated electrically conductive member (e.g., a column member of stainless steel such as SUS430). A plurality of the cathode current collectors 33 are disposed in the opening portion 23a of the cathode insulating frame 23 along the direction of disposition of a pair of the bolt insertion holes 9 (9d, 9h); i.e., along a flow channel of oxidizer gas. The cathode current collectors 33 may be embodied in the form of latticed rectangular parallelepiped protrusions formed on the interconnector 21 on a side toward the oxidizer gas chamber 31.

### <Separator 25>

The separator 25 is an electrically conductive frame plate (e.g., a plate of stainless steel such as SUS430) having a quadrangular (rectangular) shape as viewed in the stacking direction. The separator 25 has a rectangular opening portion 25a formed at a central portion as viewed in the stacking direction. An outer peripheral portion (its upper surface side) of the single cell 17 is joined by brazing to an edge portion (its lower surface side) of the separator 25 extending along the opening portion 25a. That is, the single cell 17 is joined in such a manner as to close the opening portion 25a of the separator 25.

### <Anode frame 27>

The anode frame 27 is an electrically conductive frame plate (e.g., a plate of stainless steel such as SUS430) having a quadrangular (rectangular) shape as viewed in the stacking direction. The anode frame 27 has a rectangular opening portion 27a formed at a central portion as viewed in the stacking direction and partially constituting the fuel gas chamber 35.

### <Anode insulating frame 29>

Similar to the cathode insulating frame 23, the anode insulating frame 29 is an electrically insulative frame plate having a quadrangular (rectangular) shape as viewed in the stacking direction and is a mica frame formed of soft mica. The anode insulating frame 29 has a rectangular opening portion 29a formed at a central portion as viewed in the stacking direction and partially constituting the fuel gas chamber 35.

The anode insulating frame 29 has two hole portions 45b and 45f, or a pair of elongated holes, formed at mutually facing frame portions (portions corresponding to opposite sides of a rectangle) and serving as fuel gas flow channels. As will be described in detail later, one hole portion 45b is accompanied by a plurality of (e.g., six) grooves (grooves for fuel gas inlets Fin) 47b, which are flow channels communicating with the opening portion 29a, and the other hole portion 45f is accompanied by a plurality of (e.g., six) grooves (grooves for fuel gas outlets Fout) 47f, which are flow channels communicating with the opening portion 29a.

### <Anode current collector 37>

As shown in FIG. 2(a), the anode current collector 37 is a publicly known latticed member (see, for example, a current collector 19 described in Japanese Patent Application Laid-Open *(kokai)* No. 2013-55042) in which an elastic (cushioning) spacer 51, which is a core member of mica, and an electrically conductive plate of metal (e.g., a mesh or foil of nickel having a flat plate shape) 53 are combined.

### <Single fuel cell 17>

The single cell 17 is a so-called anode support type and is configured such that a cathode layer 57 and an anode layer 59 are laminated together with a solid electrolyte layer 55 sandwiched therebetween. The single cell 17 has a quadrangular (rectangular) shape as viewed in the sacking direction and is supplied with fuel gas on its first main surface side (on the anode layer 59 side) and with oxidizer gas on its second main surface side (on the cathode layer 57 side).

Materials used to form the solid electrolyte layer 55 include, for example, zirconia-based, ceria-based, and perovskite-type electrolyte materials. Zirconia-based materials include yttria-stabilized zirconia (YSZ), scandia-stabilized zirconia (ScSZ), and calcia-stabilized zirconia (CaSZ). Generally, yttria-stabilized zirconia (YSZ) is used in many cases. A ceria-based material to be used is so-called rare earth element-added ceria. A perovskite-type material to be used is a lanthanum element-containing perovskite-type compound oxide.

Materials used to form the cathode layer 57 include perovskite-type oxides, noble metals, and cermets of noble metals and ceramic.

Materials used to form the anode layer 59 include, for example, mixtures of metals such as Ni and Fe and ceramics such as ZrO₂ ceramics, such as zirconia stabilized by at least one of rare earth elements such as Sc and Y, and CeO ceramics. Also, metals such as Ni, cermets of Ni and the ceramics, and Ni-based alloys can be used.

c) Next, fuel gas and oxidizer gas flow channels, which are essential members of the first embodiment, will be described in detail.

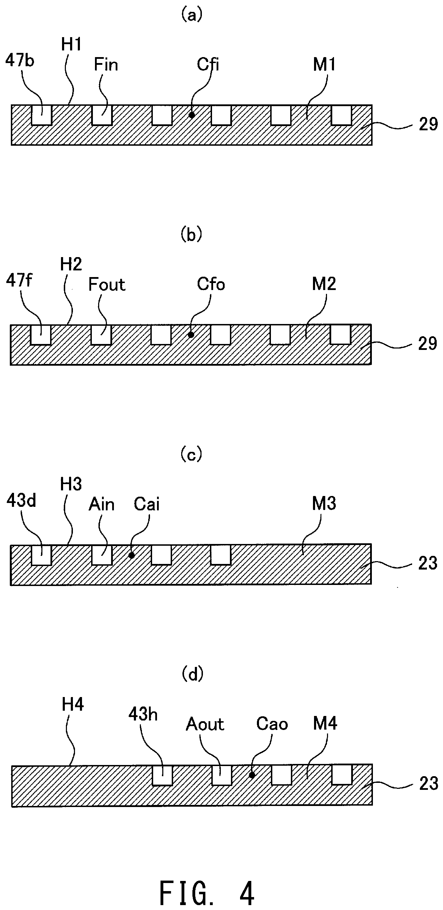

As shown in FIG. 3 and FIGS. 4(a) and 4(b), the fuel cell apparatus 1 of the first embodiment has a plurality of (e.g., six) fuel gas inlets Fin, or openings of the grooves 47b located toward the opening portion 29a, through which fuel gas flows into the fuel gas chamber 35, and a plurality of (e.g., six) fuel gas outlets Fout, or openings of the grooves 47f located toward the opening portion 29a, through which fuel gas flows out from the fuel gas chamber 35.

Meanwhile, as shown in FIG. 3 and FIGS. 4(c) and 4(d), the fuel cell apparatus 1 has a plurality of (e.g., four) oxidizer gas inlets Ain, or openings of the grooves 43d located toward the opening portion 23a, through which oxidizer gas flows into the oxidizer gas chamber 31, and a plurality of (e.g., four) oxidizer gas outlets Aout, or openings of the grooves 43h located toward the opening portion 23a, through which oxidizer gas flows out from the oxidizer gas chamber 31. Notably, the number of flow inlets Fin or Ain and the number of flow outlets Fout or Aout may be one or more than one.

As shown in FIG. 5(a), in the fuel cell apparatus 1, as viewed in the stacking direction, a first straight line L1 which connects a centroid Cfi of the fuel gas inlets Fin and a centroid Cfo of the fuel gas outlets Fout, and a second straight line L2 which connects a centroid Cai of the oxidizer gas inlets Ain and a centroid Cao of the oxidizer gas outlets Aout cross each other. That is, the fuel cell apparatus 1 is of cross-flow design in which the flow channel of fuel gas and the flow channel of oxidizer gas cross each other (see FIG. 2(b)).

Further, as viewed in the stacking direction, the centroid Cao of the oxidizer gas outlets Aout is located closer to the centroid Cfi of the fuel gas inlets Fin than to the centroid Cfo of the fuel gas outlets Fout. This condition is hereinafter called "flow channel disposition condition 1."

In FIG. 5, a rectangular first frame W1 defined by the outer lines indicates the inner peripheries (positions of inner peripheral surfaces) of the cathode insulating frame 23 and the anode insulating frame 29; and a rectangular second frame W2 defined by the inner lines indicates the outer periphery of the single cell 17 (this also applies to the following description). In FIG. 5, symbols Lf, La, Lfp, Lfm, Lap, Lam, Xp, Xm, Yp, and Ym have the above-mentioned meanings, respectively (this also applies to the following description).

The centroid will next be described with reference to FIGS. 3 through 5.

The centroid is the center of gravity of a plane figure of the flow inlet Fin or Ain or the flow outlet Fout or Aout as viewed in a direction perpendicular to the stacking direction (the vertical direction in FIGS. 3 and 4) (as viewed along, for example, a planar direction along which the cathode layer 57 extends). In the case where a plurality of the flow inlets Fin or Ain or a plurality of the flow outlets Fout or Aout exist, the centroid is the center of gravity with respect to the plane figures of all the flow inlets Fin or Ain or all the flow outlets Fout or Aout (i.e., a set of the plane figures).

Specifically, when, of the inner peripheral surfaces of the anode insulating frame 29, an inner peripheral surface on the side where the fuel gas inlets Fin are provided is viewed in a direction perpendicular to the inner peripheral surface, as shown in FIG. 4(a), the inner peripheral surface (a first surface M1 in a strip shape) has six fuel gas inlets Fin. Therefore, the center of gravity of a set of the plane figures of the six fuel gas inlets Fin is used as the centroid Cfi.

Here, for example, the centroid Cfi of a set of the fuel gas inlets Fin is disposed at the horizontal center of the first surface M1. Accordingly, as viewed in the stacking direction, the centroid Cfi of a set of the fuel gas inlets Fin is located at the midpoint of a first side H1 of the first frame W1 (see FIG. 5(a)).

Similarly, when, of the inner peripheral surfaces of the anode insulating frame 29, an inner peripheral surface on the side where the fuel gas outlets Fout are provided is viewed in a direction perpendicular to the inner peripheral surface, as shown in FIG. 4(b), the inner peripheral surface (a second surface M2 located opposite the first surface M1 and having a strip shape) has six fuel gas outlets Fout. Therefore, the the center of gravity of a set of the plane figures of the six fuel gas outlets Fout is used as the centroid Cfo.

Here, for example, the centroid Cfo of a set of the fuel gas outlets Fout is disposed at the horizontal center of the second surface M2. Accordingly, as viewed in the stacking direction, the centroid Cfo of a set of the fuel gas outlets Fout is located at the midpoint of a second side H2 of the first frame W1 opposite the first side H1 thereof (see FIG. 5(a)).

Meanwhile, when, of the inner peripheral surfaces of the cathode insulating frame 23, an inner peripheral surface on the side where the the oxidizer gas inlets Ain are provided is viewed in a direction perpendicular to the inner peripheral surface, as shown in FIG. 4(c), the inner peripheral surface (a third surface M3 in a strip shape) has four oxidizer gas inlets Ain. Therefore, the center of gravity of a set of the plane figures of the four oxidizer gas inlets Ain is used as the centroid Cai.

Here, for example, since the oxidizer gas inlets Ain are disposed leftward in FIG. 4(c), the centroid Cai of a set of the oxidizer gas inlets Ain is offset leftward from the horizontal center of the third surface M3. Accordingly, as viewed in the stacking direction, the centroid Cai of a set of the oxidizer gas inlets Ain is offset toward the first side H1 from the midpoint of the third side H3 of the first frame W1; in other words, toward the centroid Cfi of the fuel gas inlets Fin (see FIG. 5(a)).

Similarly, when, of the inner peripheral surfaces of the cathode insulating frame 23, an inner peripheral surface on the side where the the oxidizer gas outlets Aout are provided is viewed in a direction perpendicular to the inner peripheral surface, as shown in FIG. 4(d), the inner peripheral surface (a fourth surface M4 located opposite the third surface M3 and having a strip shape) has four oxidizer gas outlets Aout. Therefore, the the center of gravity of a set of the plane figures of the four oxidizer gas outlets Aout is used as the centroid Cao.

Here, since the oxidizer gas outlets Aout are disposed rightward in FIG. 4(d), the centroid Cao of a set of the oxidizer gas outlets Aout is offset rightward from the horizontal center of the fourth surface M4. Accordingly, as viewed in the stacking direction, the centroid Cao of a set of the oxidizer gas outlets Aout is offset toward the first side H1 from the midpoint of the fourth side H4 of the first frame W1; in other words, toward the centroid Cfi of the fuel gas inlets Fin (see FIG. 5(a)).

Notably, the positions of the flow inlets Fin and Ain and the flow outlets Fout and Aout shown in FIGS. 3 through 5 are of a preferred example. No particular limitation is imposed thereon so long as the above-mentioned "flow channel disposition condition 1" (in cross-flow design) is met.

d) Next, a method of manufacturing the fuel cell apparatus 1 will be described briefly.

### [Manufacturing process for members]

First, the interconnectors 21, the anode frames 27, the separators 25, and the end plates 3 and 5 were punched out from plate materials of, for example, SUS430.

The cathode insulating frames 23 and the anode insulating frames 29 shown in FIG. 3 were manufactured from a well-known mica sheet of soft mica by punching and grooving.

### [Manufacturing process for single fuel cell 17]

The single cells 17 were manufactured according to the usual method.

Specifically, first, in order to form the anode layers 59, anode paste was prepared by use of, for example, 40 to 70 parts by mass yttria-stabilized zirconia (YSZ) powder, 40 to 70 parts by mass nickel oxide powder, and binder solution. By use of the anode paste, an anode green sheet was manufactured.

In order to manufacture the solid electrolyte layers 55, solid electrolyte paste was prepared by use of, for example, YSZ powder and binder solution. By use of the solid electrolyte paste, a solid electrolyte green sheet was manufactured.

Next, the solid electrolyte green sheet was laminated on the anode green sheet. The resultant laminate was heated at 1,200°C-1,500°C for 1-10 hours, thereby yielding a sintered laminate.

In order to form the cathode layers 57, cathode paste was prepared by use of, for example, La₁₋ₓSrₓCo_{1-y}Fe_{y}O₃ powder and binder solution.

Next, the cathode paste was applied by printing to the surface of the solid electrolyte layer 55 of the sintered laminate. Then, the printed cathode paste was fired in such a manner as to avoid becoming dense; specifically, at 900°C-1,200°C for 1-5 hours, thereby forming the cathode layers 57.

Thus, the single cells 17 were completed. The separators 25 were fixed by brazing to the single cells 17, respectively.

### [Manufacturing process for fuel cell apparatus 1]

Next, the above-mentioned members were stacked in a desired number of tiers as shown in FIG. 1, and the end plates 3 and 5 were placed at opposite ends with respect to the stacking direction, thereby yielding a stacked body.

The bolts 11 were inserted through the respective bolt insertion holes 9 of the stacked body. The nuts 13 were screwed to the bolts 11 and tightened, thereby unitarily fixing the stacked body through tightening.

Thus, the fuel cell apparatus 1 of the first embodiment was completed.

e) Next, the effect of the first embodiment will be described.

The fuel cell apparatus 1 of the first embodiment employs so-called cross-flow design in which a fuel gas flow channel and an oxidizer gas flow channel cross each other. In the fuel cell apparatus 1 of cross-flow design, as viewed in the stacking direction, the centroid Cao of the oxidizer gas outlets Aout is disposed closer to the centroid Cfi of the fuel gas inlets Fin than to the centroid Cfo of the fuel gas outlets Fout. That is, the fuel gas flow channel and the oxidizer gas flow channel are disposed in such a manner as to meet the above-mentioned "flow channel disposition condition 1."

By virtue of such disposition of the centroid Cao of the oxidizer gas outlets Aout, the area of a region in which although the concentration of fuel gas is high, the concentration of oxidizer gas is low, and the amount of reaction (the amount of power generation) is small as in the conventional technique decreases, and, as shown in FIG. 5(b), the area of a region RH in which both the concentration of fuel gas and the concentration of oxidizer gas are high increases. For example, the area of the region RH becomes about a half of the area of the single cell 17. Therefore, a remarkable effect of increasing the output voltage (accordingly, enhancing the electricity generation capability) is attained.

Also, according to the first embodiment, the electricity generation capability (electricity generation efficiency) of the single fuel cell 17 itself can be improved. Therefore, the present invention can be applied to not only a fuel cell stack in which a plurality of the single fuel cells 17 are stacked but also a single-tier fuel cell apparatus 1 which uses one single fuel cell 17.

Further, in the region in which the concentration of oxidizer gas is low although the concentration of fuel gas is high, deterioration of the single fuel cell 17 occurs more easily. However, in the first embodiment, since the area of such a region is small, deterioration of the single fuel cell 17 can be suppressed, whereby the durability of the fuel cell apparatus 1 can be enhanced.

### [Second embodiment]

Next, a second embodiment will be described; however, the description of contents similar to those of the first embodiment is omitted. In the following description, structural members similar to those of the first embodiment are denoted by the same reference numerals as those of the first embodiment.

The fuel cell apparatus 1 of the second embodiment is configured such that the oxidizer gas flow channel and the fuel gas flow channel are prescribed to meet the above-described "flow channel disposition condition 1" of the first embodiment.

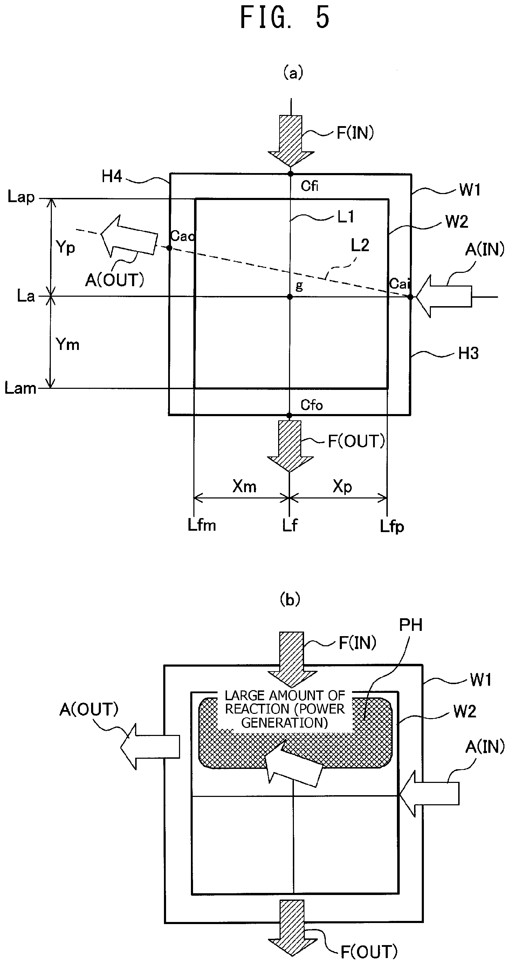

Specifically, as shown in FIG. 6(a), the centroid Cai of the oxidizer gas inlets Ain is disposed at the midpoint of the third side H3 of the first frame W1, and the centroid Cao of the oxidizer gas outlets Aout is disposed at a position offset from the midpoint of the fourth side H4 of the first frame W1 toward the centroid Cfi of the fuel gas inlets Fin. As a result, the oxidizer gas flows from the right side of FIG. 6 obliquely upward toward the left side.

In the second embodiment as well, since the fuel gas flow channel and the oxidizer gas flow channel are set to meet the above-described "flow channel disposition condition 1," as shown in FIG. 6(b), the area of the region RH in which both the concentration of fuel gas and the concentration of oxidizer gas are high increases.

As a result, an effect similar to that of the first embodiment is attained.

### [Third embodiment]

Next, a third embodiment will be described; however, the description of contents similar to those of the first embodiment is omitted. In the following description, structural members similar to those of the first embodiment are denoted by the same reference numerals as those of the first embodiment.

The fuel cell apparatus 1 of the third embodiment is configured such that the oxidizer gas flow channel and the fuel gas flow channel are prescribed to meet the following "flow channel disposition condition 2" as well as "flow channel disposition condition 1" of the first embodiment.

Specifically, in the fuel cell apparatus 1 of the third embodiment, as shown in FIG. 7, as viewed in the stacking direction, the centroid Cfo of the fuel gas outlets Fout is disposed at a position located a distance of 0.1Xp or less from the reference line Lf toward the boundary line Lfp or a distance of 0.1Xm or less from the reference line Lf toward the boundary line Lfm; the centroid Cai of the oxidizer gas inlets Ain is disposed at a position located a distance of 0.5Yp or less from the reference line La toward the boundary line Lap or a distance of 0.1Ym or less from the reference line La toward the boundary line Lam; and the centroid Cao of the oxidizer gas outlets Aout is disposed at a position offset from the reference line La toward the boundary line Lap by a distance of 0.1Yp to 0.5Yp (flow channel disposition condition 2).

Notably, in FIG. 7, a hatched strip on the third side H3 indicates a range of disposition of the centroid Cai of the oxidizer gas inlets Ain; and a hatched strip on the fourth side H4 indicates a range of disposition of the centroid Cao of the oxidizer gas outlets Aout.

By virtue of such a configuration, the third embodiment yields an effect similar to that of the first embodiment. Also, as shown in experiment example 1 which will be described later, since the above-described "flow channel disposition condition 2" is satisfied, the third embodiment yields an effect of further enhancing the electricity generation capability.

### [Fourth embodiment]

Next, a fourth embodiment will be described; however, the description of contents similar to those of the first embodiment is omitted. In the following description, structural members similar to those of the first embodiment are denoted by the same reference numerals as those of the first embodiment.

The fuel cell apparatus 1 of the fourth embodiment is configured such that the oxidizer gas flow channel and the fuel gas flow channel are prescribed to meet the following "flow channel disposition condition 3" as well as "flow channel disposition condition 1" of the first embodiment.

Specifically, in the fuel cell apparatus 1 of the fourth embodiment, as shown in FIG. 8, as viewed in the stacking direction, the centroid Cai of the oxidizer gas inlets Ain is disposed at a position offset from the reference line La toward the boundary line Lap by a distance of 0.3Yp to 0.5Yp; and the centroid Cao of the oxidizer gas outlets Aout is disposed at a position offset from the reference line La toward the boundary line Lap by a distance of 0.3Yp to 0.5Yp (flow channel disposition condition 3).

Notably, in FIG. 8, a hatched strip on the third side H3 indicates a range of disposition of the centroid Cai of the oxidizer gas inlets Ain; and a hatched strip on the fourth side H4 indicates a range of disposition of the centroid Cao of the oxidizer gas outlets Aout.

By virtue of such a configuration, the fourth embodiment yields an effect similar to that of the first embodiment. Also, as shown in experimental example 1 which will be described later, since the "flow channel disposition condition 3" is satisfied, the fourth embodiment yields an effect of further enhancing the electricity generation capability.

### [Fifth embodiment]

Next, a fifth embodiment will be described; however, the description of contents similar to those of the first embodiment is omitted. In the following description, structural members similar to those of the first embodiment are denoted by the same reference numerals as those of the first embodiment.

The fuel cell apparatus 1 of the fifth embodiment is configured such that the oxidizer gas flow channel and the fuel gas flow channel are prescribed to meet the following "flow channel disposition condition 4" as well as "flow channel disposition condition 1" of the first embodiment.

Specifically, in the fuel cell apparatus 1 of the fifth embodiment, as shown in FIG. 9, as viewed in the stacking direction, the centroid Cai of the oxidizer gas inlets Ain is disposed at a position located a distance of 0.1Yp or less from the reference line La toward the boundary line Lap or a distance of 0.1Ym or less from the reference line La toward the boundary line Lam; and the centroid Cao of the oxidizer gas outlets Aout is disposed at a position offset from the reference line La toward the boundary line Lap by a distance of 0.1Yp to 0.5Yp (flow channel disposition condition 4).

Notably, in FIG. 9, a hatched strip on the third side H3 indicates a range of disposition of the centroid Cai of the oxidizer gas inlets Ain; and a hatched strip on the fourth side H4 indicates a range of disposition of the centroid Cao of the oxidizer gas outlets Aout.

By virtue of such a configuration, the fifth embodiment yields an effect similar to that of the first embodiment. Also, as shown in experimental example 1 which will be described later, since the "flow channel disposition condition 4" is satisfied, the fifth embodiment yields an effect of enhancing the electricity generation capability.

Also, the fifth embodiment has an advantage that the electricity generation capability can be enhanced also by changing the position of the centroid Cao of the oxidizer gas outlets Aout without greatly changing the position of the centroid Cai of the oxidizer gas inlets Ain.

### [Sixth embodiment]

Next, a sixth embodiment will be described; however, the description of contents similar to those of the first embodiment is omitted. In the following description, structural members similar to those of the first embodiment are denoted by the same reference numerals as those of the first embodiment.

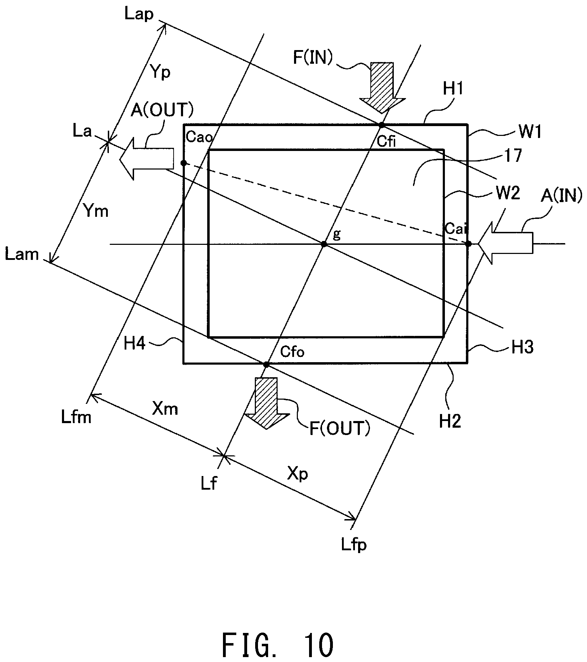

As shown in FIG. 10, in the fuel cell apparatus 1 of the sixth embodiment, the single cell 17, the cathode insulating frame 23, the anode insulating frame 29, etc., have a rectangular shape as in the case of the first embodiment; however, the centroid Cfi of the fuel gas inlets Fin and the centroid Cfo of the fuel gas outlets Fout are not aligned in the vertical direction of FIG. 10 and are greatly offset from each other in the horizontal direction of FIG. 10.

For example, the centroid Cfi of the fuel gas inlets Fin is offset rightward from the midpoint of the first side H1, and the centroid Cfo of the fuel gas outlets Fout is offset leftward from the midpoint of the second side H2.

Also, the centroid Cai of the oxidizer gas inlets Ain is located at the midpoint of the third side H3, and the centroid Cao of the oxidizer gas outlets Aout is offset upward from the midpoint of the fourth side H4.

Even the sixth embodiment having such a configuration yields effects similar to those of the above embodiments by means of meeting "flow channel disposition condition 1" or meeting any one of "flow channel disposition condition 2" to "flow channel disposition condition 4," in addition to "flow channel disposition condition 1."

### [Experimental examples]

Next, experiments conducted to verify the effects of the present invention will be described.

### <Experimental example 1>

In experimental example 1, computer simulation was performed on an object model of experiment (experimental model 1) and a model of reference (reference model or reference cell) with respect to a planar solid oxide fuel cell apparatus of a one-tier electricity generation unit type using one single cell.

Through simulation, the output voltage of experimental model 1 was obtained while the centroid Cai of the oxidizer gas inlets and the centroid Cao of the oxidizer gas outlets were changed. Also, the output voltage of the reference model was obtained. A change of the output voltage of experimental model 1 in relation to the reference model was obtained. This will be described in detail below.

### a) Structure of experimental model 1

The basic structure of experimental model 1 is similar to that of, for example, one electricity generation unit in the first embodiment.

More specifically, in experimental model 1, the planar shapes (as viewed in the stacking direction) of members, such as the electricity generation unit, the single cell, the fuel gas chamber, and the oxidizer gas chamber, were square, and the members had the following sizes. Materials of the members were the same as those of the first embodiment.

### Sizes in plan view

Fuel gas chamber and oxidizer gas chamber: 12 cm × 12 cm, single cell: 9 cm × 9 cm

Also, the position of the centroid Cfi of the fuel gas inlets was disposed at the midpoint of the first side H1 as shown in, for example, FIG. 7. In view of manufacturing variations, the centroid Cfo of the fuel gas outlets was considered to be disposed at any position within a range of 10% of Xm to 10% of Xp from the midpoint of the second side H2.

In the reference model, the centroid Cfi of the fuel gas inlets, the centroid Cfo of the fuel gas outlets, the centroid Cai of the oxidizer gas inlets, and the centroid Cao of the oxidizer gas outlets were disposed at the respective midpoints of the sides H1 to H4 of the first frame W1.

### b) Operating conditions of experimental model 1 and reference model

Experiment model 1 and the reference model were operated as follows: fuel gas (e.g., a mixed gas of hydrogen, nitrogen, and water (water vapor)) and oxidizer gas (e.g., air (a mixed gas of oxygen and nitrogen)) were supplied at a fixed flow rate for a predetermined time at a predetermined electricity generation temperature of the fuel cell apparatus.

Simulation was performed under the above-mentioned operating conditions while disposing the the centroid Cfo of the fuel gas outlets at the positions of 0, 0.1Xm, and 0.1Xp, respectively, and disposing the centroid Cai of the oxidizer gas inlets and the centroid Cao of the oxidizer gas outlets at various positions within the range of Ym to Yp as shown in the following Tables 1 to 3. Thus, for each combination of the positions of the centroids Cfo, Cai, and Cao, there was obtained the amount of change of the output voltage of Experiment model 1 in relation to the output voltage of the reference model.

The results of the calculation are shown in the following Tables 1 to 3. Notably, Tables 1 through 3 show the amount dVolt [%] of change of the output voltage of Experiment model 1 in relation to the output voltage of the reference model.

Notably, in the case of use of Xp for expression of the position of the centroid Cfo of the fuel gas outlets, the centroid Cfo is offset from Lf toward Lfp, and, in the case of use of Xm, the centroid Cfo is offset from Lf toward Lfm. In the case of use of 0, the centroid Cfo is positioned on Lf.

In the case of use of Yp for expression of the positions of the centroid Cai of the oxidizer gas inlets and the centroid Cao of the oxidizer gas outlets, the centroid Cai and the centroid Cao are offset from La toward Lap, and, in the case of use of Ym, the centroid Cai and the centroid Cao are offset from La toward Lam. In the case of use of 0, the centroid Cai and the centroid Cao are positioned on La.

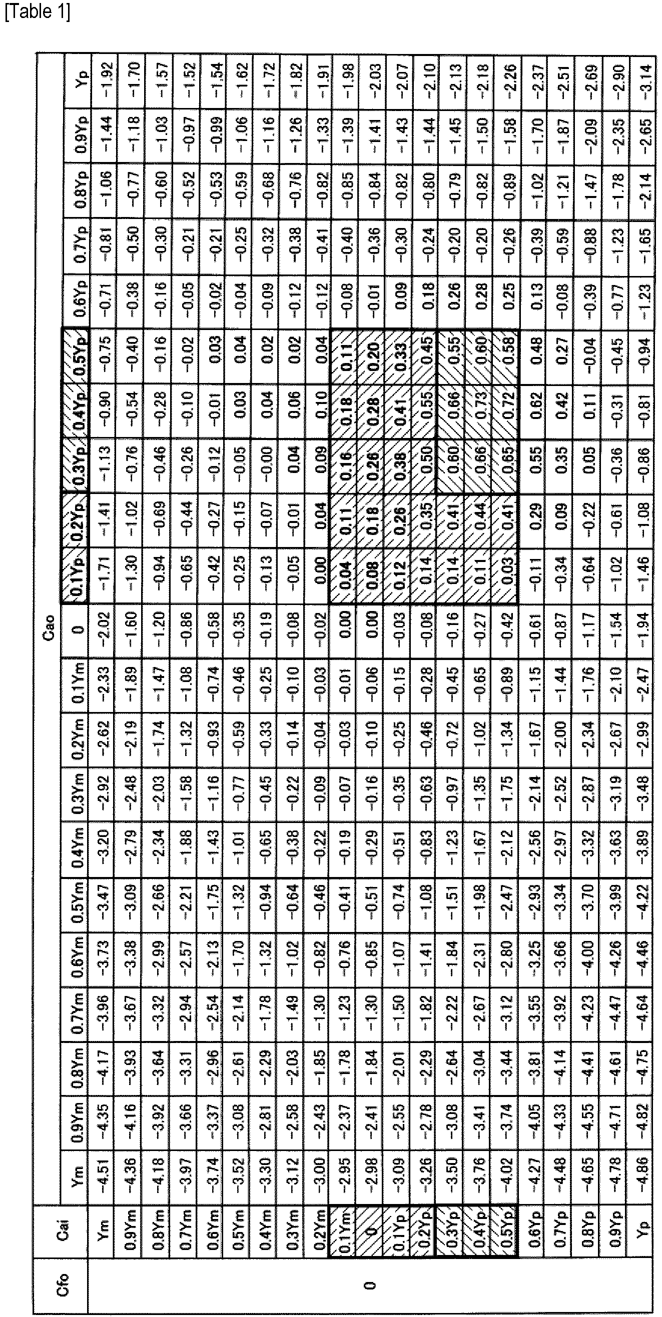

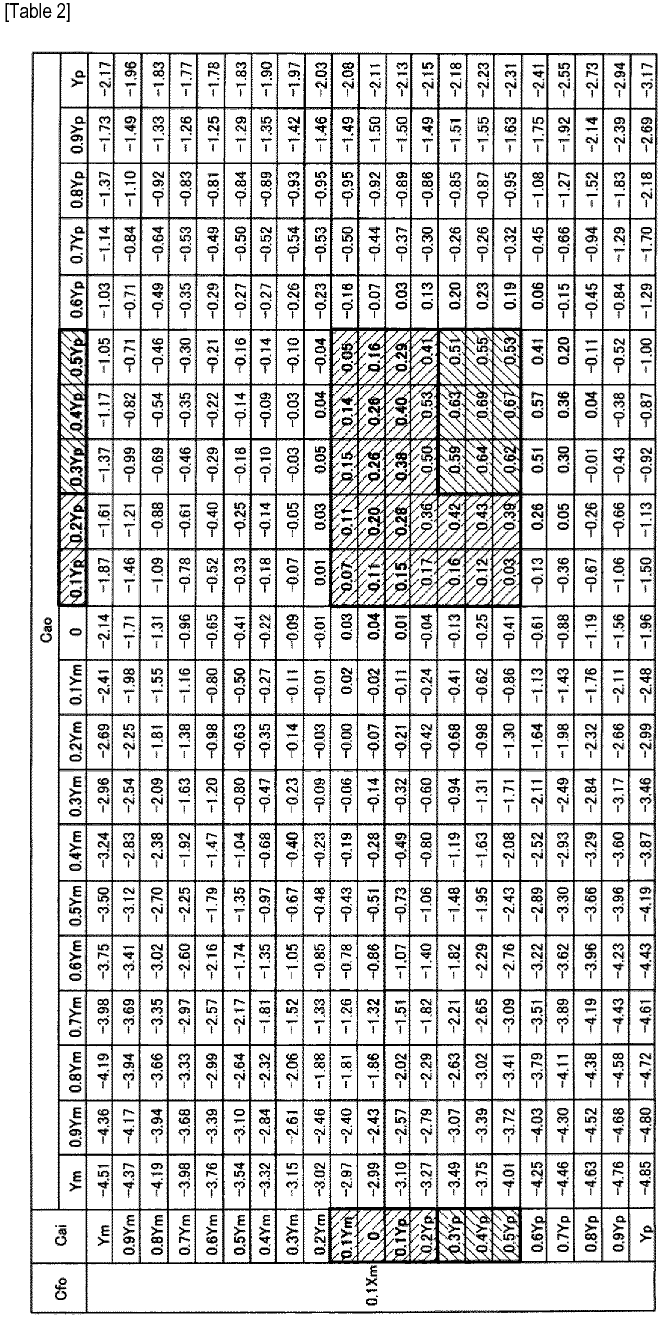

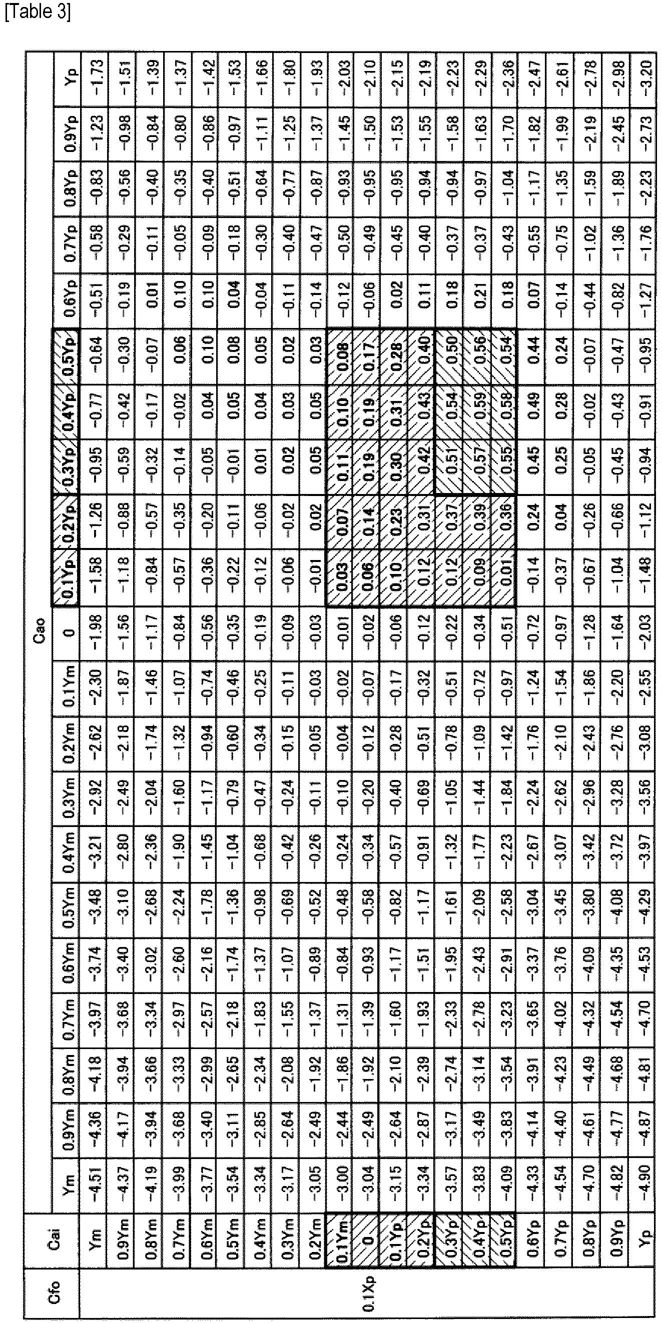

As is apparatus from the tables 1 to 3, the output voltage increases when the centroid Cai of the oxidizer gas inlets is disposed within a range of 0.1Ym to 0.5Yp and the centroid Cao of the oxidizer gas outlets is disposed within a range of 0.1Yp to 0.5Yp as shown in FIG. 7 (see hatched areas in the tables where hatching lines incline rightward or leftward).

Also, the output voltage increases more when the centroid Cai of the oxidizer gas inlets is disposed within a range of 0.3Yp to 0.5Yp and the centroid Cao of the oxidizer gas outlets is disposed within a range of 0.3Yp to 0.5Yp as shown in FIG. 8 (see hatched areas in the tables where hatching lines incline rightward).

### <Experimental example 2>

In experimental example 2, an experiment (simulation) was performed on experimental model 2 to verify the basis which experimental example 1 has in setting the positions of the centroid Cfo of the fuel gas outlets, the centroid Cai of the oxidizer gas inlets, and the centroid Cao of the oxidizer gas outlets with the position of the centroid Cfi of the fuel gas inlets employed as a reference position.

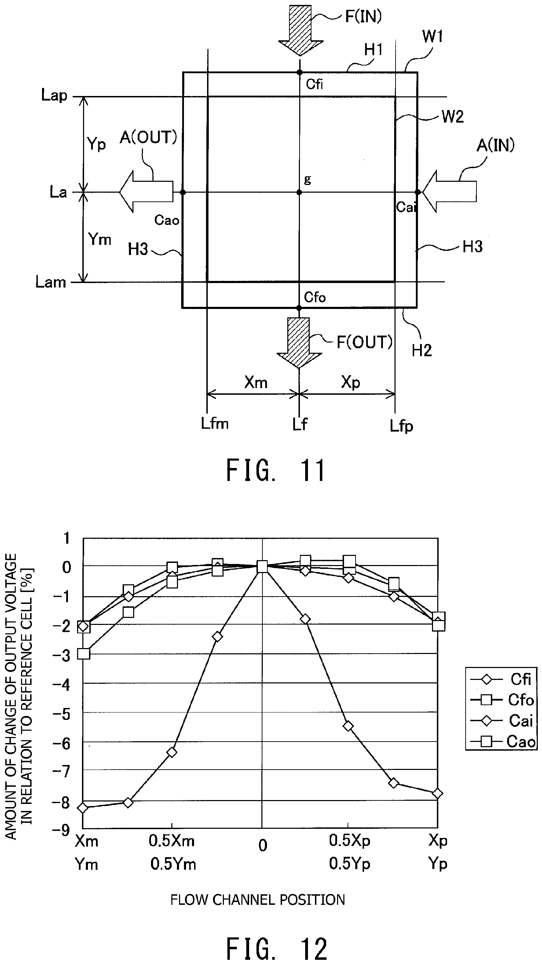

FIG. 11 shows the structure of experimental model 2. In the experimental model 2, the centroid Cfi of the fuel gas inlets was disposed at the midpoint of the first side H1; the centroid Cfo of the fuel gas outlets was disposed at the midpoint of the second side H2; the centroid Cai of the oxidizer gas inlets was disposed at the midpoint of the third side H3; and the centroid Cao of the oxidizer gas outlets was disposed at the midpoint of the fourth side H4.

In experimental model 2, as shown in the following Table 4 and FIG. 12, the position of one flow channel (centroid) was varied (the positions of the remaining three flow channels were the same as those of experimental model 2), and the output voltage was obtained for the case where power generation was performed under the operating conditions of experimental example 1. Subsequently, the output voltage in the case where the flow channel was varied was compared with the output voltage of reference experimental model 2 in which the flow channel was not varied (a reference cell in this case). Specifically, there was obtained the amount of change of the output voltage of experimental model 2 (in which the flow channel was varied) in relation to the reference model. The obtained results are shown in Table 4 and FIG. 12.

The horizontal axis of FIG. 12 indicates offsets of the positions of flow channels (i.e., the centroid Cfi of the fuel gas inlets, the centroid Cfo of the fuel gas outlets, the centroid Cai of the oxidizer gas inlets, and the centroid Cao of the oxidizer gas outlets) on sides from midpoints, and an offset of 0 indicates that the position is located at a midpoint.

**[Table 4]**

| Position of flow channel | Amount of change of output voltage in relation to reference cell [%] | | | |
|---|---|---|---|---|
| | Cfi | Cfo | Cai | Cao |
| Xm | -8.31 | -2.06 | -2.02 | -2.98 |
| Ym | | | | |
| 0.75Xm | -8.09 | -0.79 | -1.03 | -1.56 |
| 0.75Ym | | | | |
| 0.5Xm | -6.37 | -0.04 | -0.35 | -0.51 |
| 0.5Ym | | | | |
| 0.2 5Xm | -2.42 | 0.10 | -0.05 | -0.12 |
| 0.25Ym | | | | |
| 0 | 0.00 | 0.00 | 0.00 | 0.00 |
| 0.25Xp | -1.78 | -0.02 | -0.12 | 0.23 |
| 0.25Yp | | | | |
| 0.5Xp | -5.51 | -0.11 | -0.42 | 0.20 |
| 0.5Yp | | | | |
| 0.75Xp | -7.42 | -0.66 | -1.01 | -0.59 |
| 0.75Yp | | | | |
| Xp | -7.81 | -1.75 | -1.94 | -2.03 |
| Yp | | | | |

As is apparent from Table 4 and FIG. 12, the output voltage is significantly sensitive to the position of the centroid Cfi of the fuel gas inlets as compared with the positions of the other flow channels (i.e., the centroid Cfo of the fuel gas outlets, the centroid Cai of the oxidizer gas inlets, and the centroid Cao of the oxidizer gas outlets). Also, when the position of the centroid Cfi of the fuel gas inlets is 0; i.e., when the position of the centroid Cfi is located at the center of the cell width crossing the direction of fuel flow (i.e., the midpoint of the first side H1), the output voltage becomes maximal. Therefore, it is preferred that the position of the centroid Cfi of the fuel gas inlets be used as a reference position.

Namely, when the centroid Cfi of the fuel gas inlets is shifted from a cell center line (a line passing through the midpoint of the first side H1), the output voltage decreases considerably. Therefore, the centroid Cfi of the fuel gas inlets is fixed to the cell center line.

Notably, when the centroid Cfo of the fuel gas outlets is located at the cell center line (a line passing through the midpoint of the second side H2), the output voltage becomes the highest. Therefore, the centroid Cfo of the fuel gas outlets is fixed similarly (however, to be located within a range determined in consideration of manufacturing variations).

As is apparent from this experimental example 2, it is considered that in the fuel cell apparatus, the distribution of oxygen concentration as viewed in the stacking direction is important. Therefore, in the above-described embodiments, in particular, the positions, etc. of the centroid Cai of the oxidizer gas inlets and the centroid Cao of the oxidizer gas outlets are prescribed.

The present invention has been described with reference to the embodiments. However, the present invention is not limited thereto, but may be embodied in various other forms.
(1) For example, the present invention can be applied to a solid oxide fuel cell (SOFC) apparatus which uses ZrO₂ ceramic or the like as electrolyte, a polymer electrolyte fuel cell (PEFC) apparatus which uses a polymer electrolyte membrane as electrolyte, a molten carbonate fuel cell (MCFC) apparatus which uses Li-Na/K carbonate as electrolyte, a phosphoric-acid fuel cell (PAFC) apparatus which uses phosphoric acid as electrolyte, etc.
(2) In the present invention, the planar shapes of the single cell, the electricity generation unit, the fuel cell stack, etc., are not limited to quadrangular shapes (e.g., a rectangular shape and a square shape), but can employ various other shapes such as polygons and curved shapes (e.g., a circular).
(3) Further, the fuel cell apparatus of the present invention can employ the form of a single-tier fuel cell apparatus which uses one planar single cell (electricity generation unit) in addition to the form of a fuel cell stack in which a plurality of planar single cells (electricity generation units) are stacked. Also, of all the electricity generation units of the fuel cell stack, only one or a plurality of electricity generation units may have the structure of the present invention.

### DESCRIPTION OF REFERENCE NUMERALS

1: planar fuel cell apparatus (fuel cell stack)
7: electricity generation unit
17: single fuel cell
31: oxidizer gas chamber (air flow channel)
35: fuel gas chamber (fuel flow channel)
55: solid electrolyte layer
59: anode layer
57: cathode layer
Fin: fuel gas inlet
Fout: fuel gas outlet
Ain: oxidizer gas inlet
Aout: oxidizer gas outlet

## Claims

1. A planar fuel cell apparatus comprising:
a single fuel cell (17) having an anode layer (59), a cathode layer (57), and a solid electrolyte layer (55) sandwiched therebetween;
a fuel gas chamber (35) disposed on an anode layer (59) side;
an oxidizer gas chamber (31) disposed on a cathode layer (57) side;
one or a plurality of fuel gas inlets (Fin) through which fuel gas flows into the fuel gas chamber (35), and one or a plurality of fuel gas outlets (Fout) through which the fuel gas flows out from the fuel gas chamber (35); and
one or a plurality of oxidizer gas inlets (Ain) through which oxidizer gas flows into the oxidizer gas chamber (31), and one or a plurality of oxidizer gas outlets (Aout) through which the oxidizer gas flows out from the oxidizer gas chamber (31),
wherein, as viewed in a stacking direction,
a first rectilinear line (L1) which connects a centroid Cfi of the fuel gas inlet(s) (Fin) and a centroid Cfo of the fuel gas outlet(s) (Fout), and a second rectilinear line (L2) which connects a centroid Cai of the oxidizer gas inlet(s) (Ain) and a centroid Cao of the oxidizer gas outlet(s) (Aout) cross each other, and
the centroid Cao of the oxidizer gas outlet(s) (Aout) is located closer to the centroid Cfi of the fuel gas inlet(s) (Fout) than to the centroid Cfo of the fuel gas outlet (s) (Fout);
**characterized in that**:
the oxidizer gas chamber (31) is formed by a flow channel within a cathode insulating frame (23);
and, as viewed in the stacking direction,
the centroid Cfo of the fuel gas outlet(s) (Fout) is disposed at a position located a distance of 0.1Xp or less from a reference line Lf toward a boundary line Lfp or a distance of 0.1Xm or less from the reference line Lf toward a boundary line Lfm;
the centroid Cai of the oxidizer gas inlet(s) (Ain) is disposed at a position located a distance of 0.5Yp or less from a reference line La toward a boundary line Lap or a distance of 0.1Ym or less from the reference line La toward a boundary line Lam; and
the centroid Cao of the oxidizer gas outlet(s) (Aout) is disposed at a position offset from the reference line La toward the boundary line Lap by a distance of 0.1Yp to 0.5Yp,
where Lf is a rectilinear reference line on the single fuel cell (17) which passes through the centroid Cfi of the fuel gas inlet(s) (Fin) and through a centroid g of the single fuel cell (17);
La is a rectilinear reference line on the single fuel cell (17) which is orthogonal to the reference line Lf and passes through the centroid g;
Lfp is a rectilinear boundary line which extends on the single fuel cell (17), is located closer to the centroid Cai of the oxidizer gas inlet(s) (Ain) than to the reference line Lf, and is in parallel with and most distant from the reference line Lf;
Lfm is a rectilinear boundary line which extends on the single fuel cell (17), is located closer to the centroid Cao of the oxidizer gas outlet(s) (Aout) than to the reference line Lf, and is in parallel with and most distant from the reference line Lf;
Lap is a rectilinear boundary line which extends on the single fuel cell (17), is located closer to the centroid Cfi of the fuel gas inlet(s) (Fin) than to the reference line La, and is in parallel with and most distant from the reference line La;
Lam is a rectilinear boundary line which extends on the single fuel cell (17), is located closer to the centroid Cfo of the fuel gas outlet(s) (Fout) than to the reference line La, and is in parallel with and most distant from the reference line La;
Xp is the shortest distance between the reference line Lf and the boundary line Lfp;
Xm is the shortest distance between the reference line Lf and the boundary line Lfm;
Yp is the shortest distance between the reference line La and the boundary line Lap; and
Ym is the shortest distance between the reference line La and the boundary line Lam.

2. A planar fuel cell apparatus according to claim 1, wherein as viewed in the stacking direction,
the centroid Cai of the oxidizer gas inlet(s) (Ain) is disposed at a position offset from the reference line La toward the boundary line Lap by a distance of 0.3Yp to 0.5Yp; and
the centroid Cao of the oxidizer gas outlet(s) (Aout) is disposed at a position offset from the reference line La toward the boundary line Lap by a distance of 0.3Yp to 0.5Yp.

3. A planar fuel cell apparatus according to claim 1, wherein as viewed in the stacking direction,
the centroid Cai of the oxidizer gas inlet(s) (Ain) is disposed at a position located a distance of 0.1Yp or less from the reference line La toward the boundary line Lap or a distance of 0.1Ym or less from the reference line La toward the boundary line Lam; and
the centroid Cao of the oxidizer gas outlet(s) (Aout) is disposed at a position offset from the reference line La toward the boundary line Lap by a distance of 0.1Yp to 0.5Yp.

4. A planar fuel cell apparatus comprising a plurality of stacked planar fuel cell units (7) each comprising:
a single fuel cell (17) having an anode layer (59), a cathode layer (57), and a solid electrolyte layer (55) sandwiched therebetween;
a fuel gas chamber (35) disposed on an anode layer (59) side;
an oxidizer gas chamber (31) disposed on a cathode layer (57) side;
one or a plurality of fuel gas inlets (Fin) through which fuel gas flows into the fuel gas chamber (35), and one or a plurality of fuel gas outlets (Fout) through which the fuel gas flows out from the fuel gas chamber (35); and
one or a plurality of oxidizer gas inlets (Ain) through which oxidizer gas flows into the oxidizer gas chamber (31), and one or a plurality of oxidizer gas outlets (Aout) through which the oxidizer gas flows out from the oxidizer gas chamber (31),
the planar fuel cell apparatus being **characterized in that** at least any one of the planar fuel cell units (7) is the planar fuel cell apparatus according to any one of claims 1 to 3.

## Patentansprüche

1. Planare Brennstoffzellenvorrichtung umfassend:
eine einzelne Brennstoffzelle (17) mit einer Anodenschicht (59), einer Kathodenschicht (57) und einer dazwischen eingelegten Festelektrolytschicht (55);
eine Brenngaskammer (35), die auf der Seite einer Anodenschicht (59) angeordnet ist;
eine Oxidationsgaskammer (31), die auf der Seite einer Kathodenschicht (57) angeordnet ist;
einen oder eine Vielzahl von Brenngaseinlässen (Fin), durch die Brenngas in die Brenngaskammer (35) strömt, und einen oder eine Vielzahl von Brenngasauslässen (Fout), durch die das Brenngas aus der Brenngaskammer (35) strömt; und
einen oder eine Vielzahl von Oxidationsgaseinlässen (Ain), durch die Oxidationsgas in die Oxidationsgaskammer (31) strömt, und einen oder eine Vielzahl von Oxidationsgasauslässen (Aout), durch die das Oxidationsgas aus der Oxidationsgaskammer (31) strömt,
wobei, in einer Stapelrichtung gesehen,
eine erste geradlinige Linie (L1), die einen Schwerpunkt Cfi des Brenngaseinlasses (der Brenngaseinlässe) (Fin) und einen Schwerpunkt Cfo des Brenngasauslasses (der Brenngasauslässe) (Fout) verbindet, und eine zweite geradlinige Linie (L2), die einen Schwerpunkt Cai des Oxidationsgaseinlasses (der Oxidationsgaseinlässe) (Ain) und einen Schwerpunkt Cao des Oxidationsgasauslasses (der Oxidationsgasauslässe) (Aout) verbindet, sich kreuzen, und
der Schwerpunkt Cao des Oxidationsgasauslasses (der Oxidationsgasauslässe) (Aout) näher am Schwerpunkt Cfi des Brenngaseinlasses (der Brenngasauslässe) (Fout) als am Schwerpunkt Cfo des Brenngasauslasses (Fout) angeordnet ist;
**dadurch gekennzeichnet, dass**:
die Oxidationsgaskammer (31) durch einen Strömungskanal innerhalb eines Kathodenisolierrahmens (23) gebildet ist;
und, in der Stapelrichtung gesehen,
der Schwerpunkt Cfo des Brenngasauslasses (der Brenngasauslässe) (Fout) an einer Position angeordnet ist, die in einem Abstand von 0,1 Xp oder weniger von einer Bezugslinie Lf zu einer Grenzlinie Lfp oder einem Abstand von 0,1 Xm oder weniger von der Bezugslinie Lf zu einer Grenzlinie Lfm angeordnet ist;
der Schwerpunkt Cai des Oxidationsgaseinlasses (der Oxidationsgaseinlässe) (Ain) an einer Position angeordnet ist, die in einem Abstand von 0,5 Yp oder weniger von einer Bezugslinie La zu einer Grenzlinie Lap oder einem Abstand von 0,1 Ym oder weniger von der Bezugslinie La zu einer Grenzlinie Lam angeordnet ist; und
der Schwerpunkt Cao des Oxidationsgasauslasses (der Oxidationsgasauslässe) (Aout) an einer Position angeordnet ist, die von der Bezugslinie La zu der Grenzlinie Lap in einem Abstand von 0,1 Yp bis 0,5 Yp versetzt ist,
wobei Lf eine geradlinige Bezugslinie auf der einzelnen Brennstoffzelle (17) ist, die durch den Schwerpunkt Cfi des Brenngaseinlasses (der Brenngaseinlässe) (Fin) und durch einen Schwerpunkt g der einzelnen Brennstoffzelle (17) verläuft;
La eine geradlinige Bezugslinie auf der einzelnen Brennstoffzelle (17) ist, die orthogonal zur Bezugslinie Lf ist und durch den Schwerpunkt g verläuft;
Lfp eine geradlinige Grenzlinie ist, die sich an der einzelnen Brennstoffzelle (17) erstreckt, näher am Schwerpunkt Cai des Oxidationsgaseinlasses (der Oxidationsgaseinlässe) (Ain) als an der Bezugslinie Lf angeordnet ist und parallel und am weitesten entfernt von der Bezugslinie Lf ist;
Lfm eine geradlinige Grenzlinie ist, die sich an der einzelnen Brennstoffzelle (17) erstreckt, näher am Schwerpunkt Cao des Oxidationsgasauslasses (der Oxidationsgasauslässe) (Aout) als an der Bezugslinie Lf angeordnet ist und parallel und am weitesten entfernt von der Bezugslinie Lf ist;
Lap eine geradlinige Grenzlinie ist, die sich an der einzelnen Brennstoffzelle (17) erstreckt, näher am Schwerpunkt Cfi des Brenngaseinlasses (der Brenngaseinlässe) (Fin) als an der Bezugslinie Lf angeordnet ist und parallel und am weitesten entfernt von der Bezugslinie La ist;
Lam eine geradlinige Grenzlinie, die sich auf der einzelnen Brennstoffzelle (17) erstreckt, näher am Schwerpunkt Cfi des Brenngasauslass (der Brenngasauslässe) (Fout) als an der Bezugslinie La angeordnet ist und parallel und am weitesten entfernt von der Bezugslinie La ist;
Xp der kürzeste Abstand zwischen der Bezugslinie Lf und der Grenzlinie Lfp ist;
Xm der kürzeste Abstand zwischen der Bezugslinie Lf und der Grenzlinie Lfm ist;
Yp der kürzeste Abstand zwischen der Bezugslinie La und der Grenzlinie Lap ist; und
Ym der kürzeste Abstand zwischen der Bezugslinie La und der Grenzlinie Lam ist.

2. Planare Brennstoffzellenanordnung nach Anspruch 1, wobei, in der Stapelrichtung gesehen,
der Schwerpunkt Cai des Oxidationsgaseinlasses (der Oxidationsgaseinlässe) (Ain) an einer Position angeordnet ist, die von der Bezugslinie La zu der Grenzlinie Lap um einen Abstand von 0,3 Yp bis 0,5 Yp versetzt ist; und
der Schwerpunkt Cao des Oxidationsgasauslasses (der Oxidationsgasauslässe) (Aout) an einer Position angeordnet ist, die von der Bezugslinie La zu der Grenzlinie Lap um einen Abstand von 0,3 Yp bis 0,5 Yp versetzt ist.

3. Planare Brennstoffzellenanordnung nach Anspruch 1, wobei, in der Stapelrichtung gesehen,
der Schwerpunkt Cai des Oxidationsgaseinlasses (der Oxidationsgaseinlässe) (Ain) an einer Position angeordnet ist, die in einem Abstand von 0,1 Yp oder weniger von der Bezugslinie La zu der Grenzlinie Lap oder einem Abstand von 0,1 Ym oder weniger von der Bezugslinie La zu der Lam angeordnet ist; und
der Schwerpunkt Cao des Oxidationsgasauslasses (der Oxidationsgasauslässe) (Aout) an einer Position angeordnet ist, die von der Bezugslinie La zu der Grenzlinie Lap um einen Abstand von 0,1 Yp bis 0,5 Yp versetzt ist.

4. Planare Brennstoffzellenvorrichtung umfassend: eine Vielzahl von gestapelten planaren Brennstoffzelleneinheiten (7) je umfassend:
eine einzelne Brennstoffzelle (17) mit einer Anodenschicht (59), einer Kathodenschicht (57) und einer Festelektrolytschicht (55), die dazwischen eingelegt ist;
eine Brenngaskammer (35), die auf der Seite einer Anodenschicht (59) angeordnet ist;
eine Oxidationsgaskammer (31), die auf der Seite einer Kathodenschicht (57) angeordnet ist;
einen oder eine Vielzahl von Brenngaseinlässen (Fin), durch die Brenngas in die Brenngaskammer (35) strömt, und einen oder eine Vielzahl von Brenngasauslässen (Fout), durch die das Brenngas aus der Brenngaskammer (35) strömt; und
einen oder eine Vielzahl von Oxidationsgaseinlässen (Ain), durch die Oxidationsgas in die Oxidationsgaskammer (31) strömt, und einen oder eine Vielzahl von Oxidationsgasauslässen (Aout), durch die das Oxidationsgas aus der Oxidationsgaskammer (31) strömt,
wobei die planare Brennstoffzellenvorrichtung **dadurch gekennzeichnet ist, dass** mindestens eine der planaren Brennstoffzelleneinheiten (7) die planare Brennstoffzellenvorrichtung nach einem der Ansprüche 1 bis 3 ist.

## Revendications

1. Appareil à piles à combustible planaire comprenant :
une seule pile à combustible (17) ayant une couche d'anode (59), une couche de cathode (57) et une couche d'électrolyte solide (55) prise en sandwich entre elles ;
une chambre de gaz combustible (35) disposée du côté de la couche d'anode (59) ;
une chambre de gaz oxydant (31) disposée du côté de la couche de cathode (57) ;
une ou plusieurs entrées de gaz combustible (Fin) par lesquelles le gaz combustible entre dans la chambre de gaz combustible (35), et une ou plusieurs sorties de gaz combustible (Fout) par lesquelles le gaz combustible s'écoule de la chambre de gaz combustible (35) ; et
une ou plusieurs entrées de gaz oxydant (Ain) par lesquelles le gaz oxydant s'écoule dans la chambre de gaz oxydant (31), et une ou plusieurs sorties de gaz oxydant (Aout) à travers lesquelles le gaz oxydant s'écoule de la chambre de gaz oxydant (31),
dans lequel, vu dans la direction de l'empilement,
une première ligne rectiligne (L1) qui relie un centroïde Cfi de la ou des entrées de gaz combustible (Fin) et un centroïde Cfo de la ou des sorties de gaz combustible (Fout), et une deuxième ligne rectiligne (L2) qui relie un centroïde Cai de la ou des entrées de gaz oxydant (Ain) et un centroïde Cao de la ou des sorties de gaz oxydant (Aout) se croisent, et
le centroïde Cao de la ou des sorties de gaz oxydant (Aout) est situé plus près du centroïde Cfi de la ou des entrées de gaz combustible (Fout) que du centroïde Cfo de la ou des sorties de gaz combustible (Fout) ;
**caractérisé en ce que**: la chambre de gaz oxydant (31) est formée par un canal d'écoulement à l'intérieur d'un cadre isolant de cathode (23) ;
et, vu dans la direction de l'empilement,
le centroïde Cfo de la ou des sorties de gaz combustible (Fout) est disposé à une position située à une distance inférieure ou égale à 0,1 Xp d'une ligne de référence Lf vers une ligne de délimitation Lfp ou à une distance inférieure ou égale à 0,1 Xm de la ligne de référence Lf vers une ligne de délimitation Lfm ;
le centroïde Cai de la ou des entrées de gaz oxydant (Ain) est disposé à une position située à une distance inférieure ou égale à 0,5Yp d'une ligne de référence La vers une ligne de délimitation Lap ou à une distance inférieure ou égale à 0,1 Ym entre la ligne de référence La vers une ligne de délimitation Lam ; et
le centroïde Cao de la ou des sorties de gaz oxydant (Aout) est disposé à une position décalée de la ligne de référence La vers la ligne de délimitation Lap d'une distance de 0,1Yp à 0,5Yp, où Lf est une ligne de référence rectiligne sur la pile à combustible unique (17) qui passe à travers le centroïde Cfi de la ou des entrées de gaz combustible (Fin) et à travers le centroïde g de la pile à combustible unique (17) ;
La est une ligne de référence rectiligne sur la pile à combustible unique (17) qui est orthogonale à la ligne de référence Lf et qui traverse le centroïde g ;
Lfp est une ligne de délimitation rectiligne qui s'étend sur la pile à combustible unique (17), est située plus près du centroïde Cai de la ou des entrées de gaz oxydant (Ain) que de la ligne de référence Lf, et est parallèle à et la plus éloignée de la ligne de référence Lf;
Lfm est une ligne de délimitation rectiligne qui s'étend sur la pile à combustible unique (17), est située plus près du centroïde Cao de la ou des sorties de gaz oxydant (Aout) que de la ligne de référence Lf, et est parallèle à et la plus éloignée de la ligne de référence Lf ;
Lap est une ligne de délimitation rectiligne qui s'étend sur la pile à combustible unique (17), est située plus près du centroïde Cfi de la ou des entrées de gaz combustible (Fin) que de la ligne de référence La, et est parallèle à et la plus éloignée de la ligne de référence La ;
Lam est une ligne de délimitation rectiligne qui s'étend sur la pile à combustible unique (17), est située plus près du centroïde Cfo de la ou des sorties de gaz combustible (Fout) que de la ligne de référence La, et est parallèle à et la plus éloignée de la ligne de référence La ;
Xp est la distance la plus courte entre la ligne de référence Lf et la ligne de délimitation Lfp ;
Xm est la distance la plus courte entre la ligne de référence Lf et la ligne de délimitation Lfm ;
Yp est la distance la plus courte entre la ligne de référence La et la ligne de délimitation Lap ; et
Ym est la distance la plus courte entre la ligne de référence La et la ligne de délimitation Lam.

2. Appareil à pile à combustible planaire selon la revendication 1, dans lequel, vu dans la direction d'empilement,
le centroïde Cai de la ou des entrées de gaz oxydant (Ain) est disposé à une position décalée de la ligne de référence La vers la ligne de délimitation Lap d'une distance de 0,3Yp à 0,5Yp ; et
le centroïde Cao de la ou des sorties de gaz oxydant (Aout) est disposé à une position décalée de la ligne de référence La vers la ligne de délimitation Lap d'une distance de 0,3Yp à 0,5Yp.

3. Appareil à pile à combustible planaire selon la revendication 1, dans lequel, vu dans la direction d'empilement,
le centroïde Cai de la ou des entrées de gaz comburant (Ain) est disposé à une position située à une distance inférieure ou égale à 0,1Yp de la ligne de référence La vers la ligne de délimitation Lap ou à une distance inférieure à 0,1Ym de la ligne de référence La vers la ligne de délimitation Lam ; et
le centroïde Cao de la ou des sorties de gaz oxydant (Aout) est disposé à une position décalée de la ligne de référence La vers la ligne de délimitation Lap d'une distance de 0,1Yp à 0,5Yp.

4. Appareil à piles à combustible planaire comprenant une pluralité d'unités de piles à combustible planaires empilées (7) comprenant chacune :
une pile à combustible unique (17) ayant une couche d'anode (59), une couche de cathode (57) et une couche d'électrolyte solide (55) prise en sandwich entre elles ;
une chambre de gaz combustible (35) disposée du côté de la couche d'anode (59) ;
une chambre de gaz oxydant (31) disposée du côté de la couche de cathode (57) ;
une ou plusieurs entrées de gaz combustible (Fin) par lesquelles le gaz combustible entre dans la chambre de gaz combustible (35), et une ou plusieurs sorties de gaz combustible (Fout) par lesquelles le gaz combustible s'écoule de la chambre de gaz combustible (35) ; et
une ou plusieurs entrées de gaz oxydant (Ain) par lesquelles le gaz oxydant s'écoule dans la chambre de gaz oxydant (31), et une ou plusieurs sorties de gaz oxydant (Aout) à travers lesquelles le gaz oxydant s'écoule de la chambre de gaz oxydant (31),
l'appareil à piles à combustible planaire étant **caractérisé en ce qu'**au moins l'une quelconque des unités de piles à combustible planaires (7) est l'appareil à piles à combustible planaire selon l'une quelconque des revendications 1 à 3.
